# EUROPEAN PATENT SPECIFICATION

(11) **EP 2 847 746 B1**
(45) Date of publication and mention of the grant of the patent: **23.08.2017**
(21) Application number: 13787009.3
(22) Date of filing: 30.04.2013
(51) Int. Cl.: G08G 1/123, B60G 17/016, B60G 17/017, G05D 1/02

(54) **METHOD AND SYSTEM FOR MORE EFFICIENT BOARDING AND ALIGHTING AT STOPS FOR ROAD-BASED VEHICLES OF PUBLIC TRANSPORT TYPE**
VERFAHREN UND SYSTEM FÜR EFFIZIENTERES EIN- UND AUSSTEIGEN AN HALTESTELLEN VON STRASSENFAHRZEUGEN IM ÖFFENTLICHEN NAHVERKEHR
PROCÉDÉ ET SYSTÈME FACILITANT LA MONTÉE ET LA DESCENTE DES PASSAGERS DE VÉHICULES ROUTIERS DU TYPE DE TRANSPORT EN COMMUN AUX ARRÊTS

(30) Priority: 08.05.2012 SE 1250470
(43) Date of publication of application: 18.03.2015
(73) Proprietor: Scania CV AB, 151 87 Södertälje (SE)
(72) Inventor: ASLAN, Daniel, S-141 70 Segeltorp (SE)
(74) Representative: Scania CV AB
(86) International application number: PCT/SE2013/050479
(87) International publication number: WO 2013/169182

(56) References cited:
- EP-A2- 0 890 463
- WO-A1-2011/053228
- DE-A1- 3 826 843
- JP-A- 2002 208 091
- JP-A- 2004 352 043
- US-A- 3 765 692
- US-A- 6 061 615
- US-A1- 2005 248 069
- US-A1- 2008 184 623
- US-A1- 2009 184 480
- US-A1- 2011 035 104
- US-B1- 8 162 335

## Description

### TECHNICAL FIELD

The invention relates to a method for more efficient boarding and alighting at stops for road-based vehicles of public transport type according to the preamble of claim 1. It relates also to a system for more efficient boarding and alighting at stops for road-based vehicles of public transport type according to the preamble of claim 10. The invention relates also to a motor vehicle. It relates as well to a computer programme and a computer programme product.

### BACKGROUND

Road-based vehicles of public transport type such as buses, particularly urban buses, are currently subject to timetable stress which in certain cases results in their not having time to "kneel", i.e. to lower the vehicle in order to facilitate boarding and alighting, at each bus stop. In many cases the kneeling takes place after the bus has come to a halt and passengers are substantially on board, i.e. it takes place too late.

One solution is to set a lower level for the vehicle's height relative to the carriageway, what is known as bumper stop level, and to run all the time at this level to avoid kneeling at bus stops. However, this may entail damage to the vehicle in that its chassis might strike the carriageway where there are lumps and the like in the road. Running the vehicle at such a lowered level also results in a less comfortable ride.

JP2004352043 discloses a device for automatically controlling a vehicle height at a suitable height for traveling.

US3765692 discloses an apparatus for automatically adjusting the floor of a moving vehicle to the height of a loading dock or platform.

JP2002208091 discloses a method for notifying the driver that passengers have been detected aiming to enter or the leave a bus.

### OBJECTS OF THE INVENTION

One object of the present invention is to propose a method for boarding and alighting at stops for road-based vehicles of public transport type which makes safe and efficient boarding and alighting possible for more efficient operation of the vehicle's route.

A further object of the present invention is to propose a system for more efficient boarding and alighting at stops for road-based vehicles of public transport type which makes efficient boarding and alighting possible for more efficient operation of the vehicle's route.

### SUMMARY OF THE INVENTION

These and other objects indicated by the description set out below are achieved by means of a method and system for more efficient boarding and alighting at stops for road-based vehicles of public transport type, a motor vehicle, a computer programme and a computer programme product of the kind indicated in the introduction which further present the features indicated in the characterising parts of the attached independent claims 1 and 8. Preferred embodiments of the method and the system are defined in the attached dependent claims 2-7 and 9-14. The invention achieves the objects with a method for more efficient boarding and alighting at stops for road-based vehicles of public transport type, comprising the step of activating lowering of the vehicle for said boarding and alighting at stops, which step takes place before arrival there, on the basis of the vehicle's location and those of stops along its itinerary, so that said lowering is substantially completed for boarding and alighting there. Safe and efficient alighting and boarding for more efficient operation of the vehicle's route is thus made possible in that the vehicle's lowering takes place before arrival, making it possible for safe boarding and alighting to take place immediately, since the lowering is completed by the time of arrival at the stop. This means that the time spent at stops is reduced, giving the driver time to lower the vehicle for boarding and alighting while at the same time making it possible to maintain timetables. The driver is thus not tempted to refrain from lowering or to continuously run the vehicle in a lowered or partly lowered state, and the risk of damage to the vehicle from running in a lowered state is therefore minimised. The fact that the lowering is completed by the time of arrival at the stop means that there is no risk of harm to passengers because of too great distances between carriageway and vehicle at the vehicle's boarding and alighting ramp while the vehicle is being lowered, or because the vehicle is not lowered at all.

In one embodiment the method comprises the step of determining said locations of stops on the basis of map data which may thus serve as a simple and effective way of determining the locations of stops ahead along the vehicle's route and thus make it possible to activate lowering of the vehicle before arrival at stops, enabling efficient boarding and alighting and hence efficient operation of the vehicle.

In one embodiment the method comprises the step of determining said locations of stops by means of a geographical system such as GPS, which makes it possible for vehicles to determine locations of stops and then store these locations to enable lowering before arrival there on a subsequent run. This creates the possibility of a learning procedure for a vehicle which by registering the locations of stops while travelling on one or more runs learns where the stops are situated. There is also the possibility of supplying this information about locations of stops registered by means of the geographical positioning system to other vehicles which intend to call at stops whose locations have been determined by means of the geographical positioning system. Geographical positioning systems also make it possible to determine the location of the respective vehicle. Registering stops in this way makes it possible to determine the location of a temporary stop, e.g. a stop which has for some reason been temporarily moved.

In one embodiment the method comprises the step of providing said locations of stops by means of registered itinerary characteristics which comprise locations of stops along the vehicle's itinerary/route. This makes it possible for the respective vehicle to use said registered itinerary data as a basis for lowering the vehicle before arrival there so that said lowering is substantially completed for boarding and alighting there.

In one embodiment of the method, the step of activating said lowering takes place at the request of passengers wishing to board and/or alight. The lowering thus only takes place when necessary, i.e. when passengers wish to board or alight from the vehicle.

In one embodiment the method comprises the step of determining said passenger requests by monitoring of stop signals and/or monitoring of movements in the vehicle and/or monitoring of prospective passengers at stops. Efficient monitoring is thus made possible so that the risk of unnecessary lowering of the vehicle is minimised, resulting in efficient operation of the vehicle.

In one embodiment of the method, the step of activating said lowering takes place on the basis of vehicle-specific characteristics, e.g. braking or direction indicator activity. Identifying such vehicle-specific characteristics minimises the risk of unnecessary lowering of the vehicle, resulting in efficient operation of the vehicle on routes.

In one embodiment of the method, said activation pertains to progressive lowering of the vehicle. This makes partial lowering possible where there is uncertainty about whether passengers wish to board or alight from the vehicle at a coming stop, with the result that if no boarding or alighting takes place there, the vehicle may continue its journey without coming unnecessarily to a halt. Such partial lowering where there is uncertainty about boarding and/or alighting results in efficient operation of the vehicle on routes.

In one embodiment of the method, said lowering is carried through if the vehicle has to call at the respective stop. Relatively efficient boarding and alighting is thus made possible.

The invention achieves the objects with a system for more efficient boarding and alighting at stops for road-based vehicles of public transport type, comprising means for activating lowering of the vehicle for said boarding and alighting at stops, which means for activating said lowering comprise means for activating said lowering before arrival there, on the basis of the vehicle's location and those of stops along its itinerary, so that said lowering is substantially completed for boarding and alighting there. Safe and efficient alighting and boarding for more efficient operation of the vehicle's route is thus made possible in that the vehicle's lowering takes place before arrival, making it possible for safe boarding and alighting to take place immediately, since the lowering is completed by the time of arrival at the stop. This means that the time spent at stops is reduced, giving the driver time to lower the vehicle for boarding and alighting while at the same time making it possible to maintain timetables. The driver is thus not tempted to refrain from lowering or to continuously run the vehicle in a lowered or partly lowered state, and the risk of damage to the vehicle from running in a lowered state is therefore minimised. The fact that the lowering is completed by the time of arrival at the stop means that there is no risk of harm to passengers because of too great distances between carriageway and vehicle at the vehicle's boarding and alighting ramp while the vehicle is being lowered, or because the vehicle is not lowered at all.

In one embodiment the system comprises means for determining said locations of stops on the basis of map data which may thus serve as a simple and effective way of determining the locations of stops ahead along the vehicle's route and thus make it possible to activate lowering of the vehicle before arrival at stops, enabling efficient boarding and alighting and hence efficient operation of the vehicle.

In one embodiment the system comprises means for determining said locations of stops by means of a geographical system such as GPS, which makes it possible for vehicles to determine locations of stops and then store these locations to enable lowering before arrival there on a subsequent run. This creates the possibility of a learning procedure for a vehicle which by registering the locations of stops while travelling on one or more runs learns where the stops are situated. There is also the possibility of supplying this information about locations of stops registered by means of the geographical positioning system to other vehicles which intend to call at stops whose locations have been determined by means of the geographical positioning system. Geographical positioning systems also make it possible to determine the location of the respective vehicle. Registering stops in this way makes it possible to determine the location of a temporary stop, e.g. a stop which has for some reason been temporarily moved.

In one embodiment the system comprises means for providing said locations of stops by means of registered itinerary characteristics which comprise locations of stops along the vehicle's itinerary/route. This makes it possible for the respective vehicle to use said registered itinerary data as a basis for lowering the vehicle before arrival there so that said lowering is substantially completed for boarding and alighting there.

In one embodiment of the system, said means for activating said lowering comprises means for activating said lowering at the request of passengers wishing to board and/or alight. The lowering thus only takes place when necessary, i.e. when passengers wish to board or alight from the vehicle.

In one embodiment the system comprises means for determining said passenger requests comprising means for monitoring of stop signals and/or means for monitoring of movements in the vehicle and/or means for monitoring of prospective passengers at stops. Efficient monitoring is thus made possible so that the risk of unnecessary lowering of the vehicle is minimised, resulting in efficient operation of the vehicle.

In one embodiment of the system, said means for activating said lowering comprise means for activating said lowering on the basis of vehicle-specific characteristics, e.g. braking or direction indicator activity. Identifying such vehicle-specific characteristics minimises the risk of unnecessary lowering of the vehicle, resulting in efficient operation of the vehicle on routes.

In one embodiment of the system, said means for activation comprise means for progressive lowering of the vehicle. This makes partial lowering possible where there is uncertainty about whether passengers wish to board or alight from the vehicle at a coming stop, with the result that if no boarding or alighting takes place there, the vehicle may continue its journey without coming unnecessarily to a halt. Such partial lowering where there is uncertainty about boarding and/or alighting results in efficient operation of the vehicle on routes.

In one embodiment of the system, said lowering is arranged to be carried through if the vehicle has to call at the respective stop. Relatively efficient boarding and alighting is thus made possible.

### DESCRIPTION OF DRAWINGS

The present invention will be better understood from reading the detailed description set out below in conjunction with the attached drawings, in which the same reference notations are used for similar items throughout the various views and
Fig. 1 schematically illustrates a motor vehicle according to an embodiment of the present invention,
Fig. 2 is a schematic plan view of a motor vehicle showing its chassis and air suspension system,
Fig. 3 schematically illustrates a system for more efficient boarding and alighting at stops for road-based vehicles of public transport type according to an embodiment of the present invention,
Fig. 4 is a schematic block diagram of a method for more efficient boarding and alighting at stops for road-based vehicles of public transport type according to the present invention, and
Fig. 5 schematically illustrates a computer according to an embodiment of the present invention.

### DESCRIPTION OF EMBODIMENTS

The term "link" refers herein to a communication link which may be a physical connection, e.g. an opto-electronic communication line, or a non-physical connection, such as a wireless connection, e.g. a radio link or microwave link.

The term "lowering the vehicle" refers herein to lowering the whole vehicle, lowering either side of the vehicle, lowering the front or rear of the vehicle and lowering either side at the front or rear of the vehicle.

The term "route" refers herein to a predetermined itinerary for a road-based vehicle of public transport type such as a bus, comprising a number of stops at specific locations for boarding and alighting of passengers.

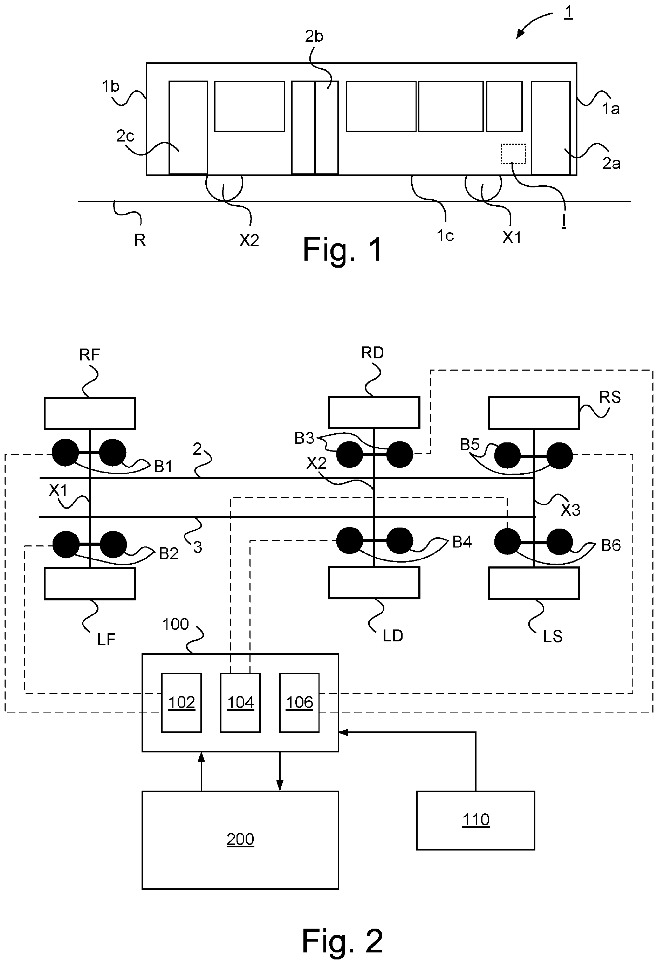

Fig. 1 illustrates schematically a motor vehicle 1 according to an embodiment of the present invention. The vehicle here exemplified is a road-based vehicle of public transport type in the form of a bus. The bus has a front end 1 a and a rear end 1 b. It also has an underside 1 c facing towards the road surface. The bus in this embodiment has a forward wheeled axle X1 and a powered rear wheeled axle X2. It has a forward door device 2a, a rear door device 2b and an intermediate door device 2c which are intended for boarding and alighting. The bus is provided with an air suspension system comprising undepicted bellows units situated close to the respective axles to raise and lower the bus so that the distance between the vehicle's underside 1c and the carriageway R is reduced by lowering to facilitate boarding and alighting at the forward, rear and/or intermediate door devices.

The vehicle is provided with a system I according to the present invention.

Fig. 2 is a schematic plan view of a motor vehicle showing its chassis and air suspension system.

The vehicle comprises a frame 2, 3, a forward axle X1 with opposite front wheels RF, LF, a powered rear axle X2 with opposite tractive wheels RD, LD and a rear tag axle X3 with opposite tag axle wheels RS, LS.

The vehicle is further provided with an air suspension system comprising a bellows configuration which comprises a first bellows unit B1 situated on the right side close to the forward axle X1 and a second bellows unit B2 situated on the left side close to the forward axle X1. Each of the first and second bellows units B1, B2 comprises a pair of bellows which are air-connected to one another, with one bellows situated on each side of the axle X1.

The bellows configuration further comprises a third bellows unit B3 situated on the right side close to the powered rear axle X2 and a fourth bellows unit B4 situated on the left side close to the powered rear axle X2. The third and fourth bellows units B3, B4 each comprise a pair of bellows which are connected to one another, with one bellows situated on each side of the axle X2.

The bellows configuration further comprises a fifth bellows unit B5 situated on the right side close to the rear tag axle X3 and a sixth bellows unit B6 situated on the left side close to the rear tag axle X3. The fifth and sixth bellows units B5, B6 each comprise a pair of bellows air-connected to one another, with one bellows situated on each side of the axle X3.

The respective bellows units B1-B6 are situated between the vehicle frame 2, 3 and the respective axles, making it possible for the vehicle to be raised and lowered by regulation of air in bellows units.

The air suspension system further comprises an air valve configuration 100 according to an embodiment of the present invention. The air valve configuration is connected to the bellows configuration B1, B2, B3, B4, B5, B6 and is adapted to regulating the air pressure in the respective bellows units B1, B2, B3, B4, B5, B6 of the bellows configuration.

The vehicle further comprises an air pressure source configuration 110 to supply air to the air valve configuration 100.

The air valve configuration 100 comprises in one embodiment air valve units 102, 104, 106, here a first air valve unit 102, a second air valve unit 104 and a third air valve unit 106, comprising valve means with an air intake connected to a compressed air source, a venting outlet and a supply outlet, and valve means adapted to regulating the air pressure in the bellows units.

In this embodiment, the first valve unit 102 is connected to the first and second bellows units B1, B2 via respective air lines for regulation of air pressure in the first and second bellows units B1, B2. Also in this embodiment the second valve unit 104 is connected to the fourth and sixth bellows units B4, B6 via respective air lines for regulation of air pressure in the fourth and sixth bellows units B4, B6. Also in this embodiment the third valve unit 106 is connected to the third and fifth bellows units B3, B5 via respective air lines for regulation of air pressure in the third and fifth bellows units B3, B5.

The respective bellows units B1, B2, B3, B4, B5, B6 of the bellows configuration are each provided with a pressure sensor adapted to monitoring the air pressure in them.

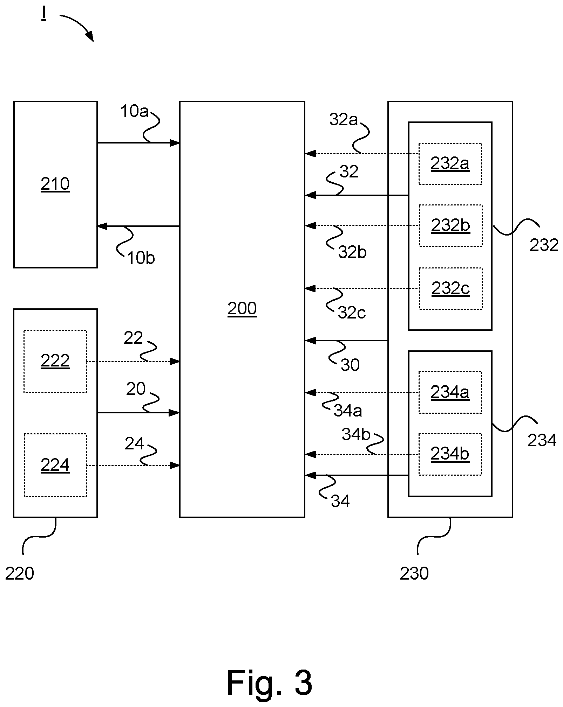

The air valve configuration 100 is connected to an electronic control unit 200 which is adapted to causing said air valve configuration to regulate bellows units B1, B2, B3, B4, B5, B6 for raising and lowering of the vehicle, which lowering takes the form of kneeling to facilitate boarding and alighting. Said raising and lowering takes place on the basis of input data containing information about the vehicle's location and the locations of stops along its itinerary so that said lowering is substantially completed for boarding and alighting there. Fig. 3 illustrates an example of a system with such an electronic control unit.

The vehicle described above in relation to Fig. 2 has a front axle X1, a powered axle X2 and a tag axle X3, but the invention is applicable on any suitable vehicle which has for example a front axle and a rear axle as in Fig. 1, or two-wheel or four-wheel drive; two front axles, a powered axle and a tag axle; or vehicles with further axles, e.g. ten or twelve, one or more of them being powered.

Fig. 3 illustrates schematically a system for more efficient boarding and alighting at stops for road-based vehicles of public transport type according to the present invention.

The system I comprises an electronic control unit 200 for more efficient boarding and alighting at stops for road-based vehicles of public transport type.

The system I further comprises an air suspension system 210 comprising air suspension means such as bellows units for raising and lowering the vehicle, which lowering is intended to facilitate boarding and alighting at stops. Said air suspension system in one variant is a system in accordance with Fig. 2.

The air suspension system may be of any suitable configuration depending for example on the number of axles.

The system I further comprises itinerary determination means 220 to determine locations of stops along the vehicle's planned itinerary. Said itinerary determination means are adapted to providing locations of stops along the itinerary and the vehicle's own location along same.

Said itinerary determination means 220 comprise in one variant a map information unit 222 containing map data including said locations of stops along the itinerary.

Said itinerary determination means 220 further comprise vehicle location determination means 224 in the form of a geographical positioning system such as a geographical location determination system, i.e. GPS, to identify the vehicle's location relative to those of respective stops along its itinerary.

The itinerary determination means 220, i.e. the map information unit 222 and the vehicle location determination means 224, thus make it possible to determine the locations at which there are stops along the itinerary, e.g. along the vehicle's planned route. One embodiment uses map data from the map information unit to ascertain beforehand the locations of stops along the planned route. One embodiment uses the vehicle location determination means 224 to register the locations of stops along the itinerary, making it possible for the vehicle on subsequent journeys along the same route to use the locations of the stops along the itinerary which have been registered by the vehicle location determination means. The locations registered by the vehicle location determination means may also be conveyed by communication means to other vehicles so that they have access to the locations of the stops registered.

The system I further comprises vehicle lowering activation means 230 to activate lowering of the vehicle before arrival at respective stops, on the basis of the vehicle's location and those of stops along its itinerary.

Said vehicle lowering activation means comprise boarding/alighting indication means 232 to indicate passengers wishing to board and/or alight.

Said boarding/alighting indication means comprise in one variant stop signal monitoring means 232a to monitor stop signals from stop means of the vehicle activated by passengers indicating their wish to alight at a coming stop.

Said boarding/alighting indication means comprise in one variant movement monitoring means 232b to monitor movements of passengers on board the vehicle indicating their wish to alight at a coming stop.

Said boarding/alighting indication means comprise in one variant passenger identification means 232c to identify passengers at a stop indicating their wish to board there. Said passenger identication means comprise in one variant camera means to monitor passengers at stops.

Said vehicle lowering activation means 230 comprise in one variant vehicle intention determination means 234 to determine any intention for the vehicle to call at coming stops.

Said vehicle intention determination means comprise in one variant direction indicator means 234a, so-called flashers, indicating the intention to call at coming stops.

Said vehicle intention determination means comprise in one variant braking determination means 234b to identify deceleration of the vehicle at coming stops. Said braking determination means comprise in one variant brake monitoring means to monitor braking by the vehicle's service brake, auxiliary brake and/or engine brake. Said braking determination means comprise in one variant braking cause determination means comprising distance determination devices to determine distances from vehicles in front for identification of possible vehicles ahead and their speed relative to the host vehicle, and camera means for identification of any vehicles ahead. If there are no vehicles ahead or if vehicles ahead are not decelerating or running at a lower speed than the host vehicle, causing it to brake, and it nevertheless decelerates at a coming stop, it is relatively likely to call there.

The electronic control unit 200 is signal-connected to said air suspension system 210 for raising and lowering the vehicle, via a link 10a which enables it to send to said system a signal which represents lowering/raising data to lower/raise the vehicle relative to the carriageway.

The electronic control unit 200 is signal-connected to said air suspension system 210 via a link 10b which enables it to receive from said system a signal which represents positional data pertaining to the system's air suspension means/bellows units, to determine the vehicle's position relative to the carriageway. Said positional data may comprise pressure data and/or level data.

The electronic control unit 200 is signal-connected to said itinerary determination means 220 via a link 20 which enables it to receive from said means 220 a signal which represents itinerary data comprising location data from the vehicle location determination means 224 and map data including locations of stops along the itinerary. In one variant, the electronic control unit 200 is signal-connected to said map information unit 222 via a link 22 and adapted to receiving from said unit a signal which represents map data, and is signal-connected to said vehicle location determination means 224 via a link 24 and adapted to receiving from said means 224 a signal which represents location data.

The electronic control unit 200 is signal-connected to said vehicle lowering activation means 230 via a link 30 which enables it to receive from said means 230 a signal which represents vehicle lowering activation data to activate lowering of the vehicle before arrival there, on the basis of the vehicle's location and those of stops along its itinerary.

The electronic control unit 200 is signal-connected to said boarding/alighting indication means 232 via a link 32 which enables it to receive from said means 232 a signal which represents boarding/alighting indication data to indicate passengers wishing to board and/or alight, in order to activate lowering of the vehicle before arrival at the respective stop, on the basis of the vehicle's location and those of stops along its itinerary.

The electronic control unit 200 is signal-connected to said stop signal monitoring means 232a via a link 32a which enables it to receive from said means 232a a signal which represents stop signal monitoring data to monitor stop signals from stop means of the vehicle activated by passengers to indicate their wish to alight at a coming stop, in order to activate lowering of the vehicle before arrival there, on the basis of the vehicle's location and those of stops along its itinerary.

The electronic control unit 200 is signal-connected to said movement monitoring means 232b via a link 32b which enables it to receive from said means 232b a signal which represents movement monitoring data to monitor movements of passengers on board the vehicle indicating their wish to alight at a coming stop, in order to activate lowering of the vehicle before arrival there, on the basis of the vehicle's location and those of stops along its itinerary.

The electronic control unit 200 is signal-connected to said passenger identification means 232c via a link 32c which enables it to receive from said means 232c a signal which represents passenger identification data to identify passengers at a coming stop wishing to board, in order to activate lowering of the vehicle before arrival there, on the basis of the vehicle's location at those of stops along its itinerary.

The electronic control unit 200 is signal-connected to said vehicle intention determination means 234 via a link 34 which enables it to receive from said means 234 a signal which represents vehicle intention data to determine any intention for the vehicle to call at coming stops, in order to activate lowering of the vehicle before arrival there, on the basis of the vehicle's location and those of stops along its itinerary.

The electronic control unit 200 is signal-connected to said direction indicator means 234a via a link 34a which enables it to receive from said means 234a a signal which represents direction indication data indicating the intention to call at coming stops, in order to activate lowering of the vehicle before arrival there, on the basis of the vehicle's location and those of stops along its itinerary.

The electronic control unit 200 is signal-connected to said braking determination means 234b via a link 34b which enables it to receive from said means 234b a signal which represents vehicle deceleration data to identify deceleration of the vehicle at coming stops, in order to activate lowering of the vehicle before arrival there, on the basis of the vehicle's location and those of stops along its itinerary.

The electronic control unit 200 is adapted to processing said positional data from the air suspension system 210, said itinerary data with locations of stops, and said vehicle lowering activation means to activate said lowering of the vehicle by sending lowering data to the air suspension system before arrival at the respective stop, on the basis of the vehicle's location and those of stops along its itinerary, so that said lowering is substantially completed for boarding and alighting there.

The electronic control unit 200 is adapted to processing said positional data from the air suspension system 210, said itinerary data with locations of stops, and said boarding/alighting data comprising one or more from among said stop signal monitoring data, movement monitoring data and passenger identification data, and/or vehicle intention data comprising one or more from among said direction indication data and vehicle deceleration data to activate said lowering of the vehicle if it is indicated that the vehicle intends to call at a stop, on the basis of one or more from among said data by sending lowering data to the air suspension system before arrival at the respective stop, on the basis of the vehicle's location and those of stops along its itinerary, so that said lowering is substantially completed for boarding and alighting there.

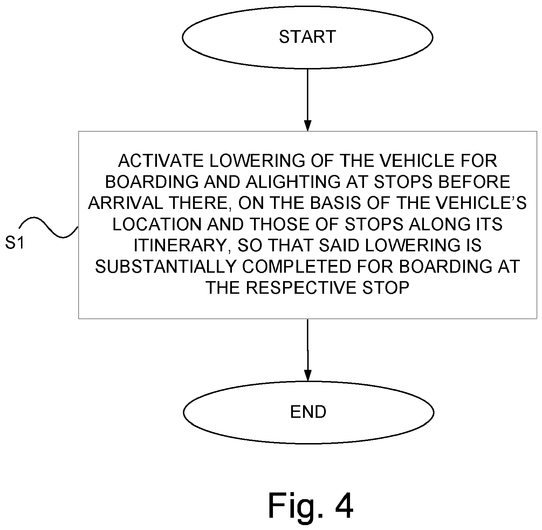

Fig. 4 is a schematic block diagram of a method for more efficient boarding and alighting at stops for road-based vehicles of public transport type according to an embodiment of the present invention.

In one embodiment the method for more efficient boarding and alighting at stops for road-based vehicles of public transport type comprises a step S1 whereby lowering of the vehicle for boarding and alighting at stops is activated before arrival there, on the basis of the vehicle's location and those of stops along its itinerary, so that said lowering is substantially completed for boarding and alighting there.

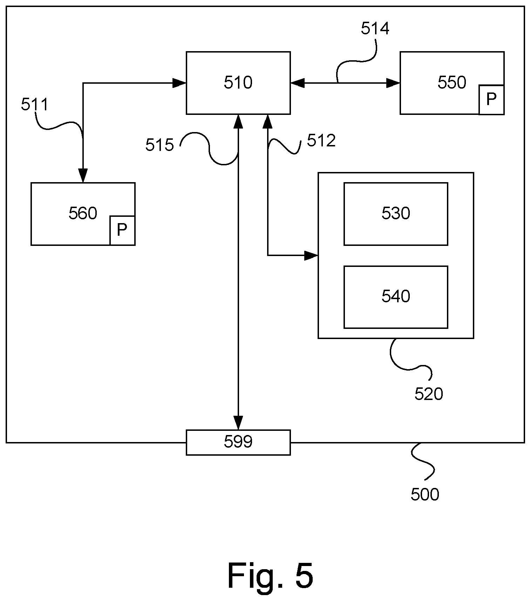

Figure 5 is a diagram of one version of a device 500. The control unit 200 described with reference to Figure 3 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for more efficient boarding and alighting at stops for road-based vehicles of public transport type according to the innovative method. The programme P comprises routines for activating lowering of the vehicle for boarding and alighting at stops before arrival at the respective stop, on the basis of the vehicle's location and those of stops along its itinerary, so that said lowering is substantially completed for boarding and alighting there. The programme P may be stored in an executable form or in compressed form in a memory 560 and/or in a read/write memory 550.

Where the data processing unit 510 is described as performing a certain function, it means that it conducts a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The links associated for example with the control unit 200 may be connected to the data port 599.

When data are received on the data port, they are stored temporarily in the second memory element 540. When input data received have been temporarily stored, the data processing unit 510 is prepared to conduct code execution as described above. The signals received on the data port may be used by the device 500 to activate lowering of the vehicle for boarding and alighting at stops before arrival at the respective stop, on the basis of the vehicle's location and those of stops along its itinerary, so that said lowering is substantially complted for boarding and alighting there.

Parts of the methods herein described may be conducted by the device 500 by means of the data processing unit 510 which runs the programme stored in the memory 560 or the read/write memory 550. When the device 500 runs the programme, methods herein described are executed.

The above description of the preferred embodiments of the present invention is provided for illustrative and descriptive purposes. It is not intended to be exhaustive nor to restrict the invention to the variants described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

## Claims

1. A method for more efficient boarding and alighting at stops for road-based vehicles of public transport type, comprising the step of activating lowering of the vehicle for said boarding and alighting at stops, the step of activating (S1) said lowering takes place before arrival at the respective stop, on the basis of the vehicle's location and those of stops along its itinerary, so that said lowering is substantially completed for boarding and alighting there and wherein the step of determining said locations of stops being on the basis of map data **characterised in that** said activation pertains to progressive lowering of the vehicle.

2. A method according to claim 1, comprising the step of determining said locations of stops by means of a geographical positioning system.

3. A method according to any one of claims 1-2, comprising the step of providing said locations of stops by means of registered itinerary characteristics.

4. A method according to any one of claims 1-3, in which the step of activating said lowering takes place in response to the wishes of passengers intending to board and/or alight.

5. A method according to claim 4, comprising the step of determining said passenger wishes, comprising monitoring of stop signals and/or monitoring of movements on board the vehicle and/or monitoring of prospective passengers at stops.

6. A method according to any one of claims 1-5, in which the step of activating said lowering takes place on the basis of vehicle-specific characteristics, e.g. braking, direction indicator activity.

7. A method according to claim 1, in which said lowering is carried through to completion if the vehicle has to call at the respective stop.

8. A system (I) for more efficient boarding and alighting at stops for road-based vehicles of public transport type, comprising means for activating lowering of the vehicle for said boarding and alighting at stops, said means (200; 210) for activating said lowering comprise means (200, 210, 220, 230) for activating said lowering before arrival at the respective stop, on the basis of the vehicle's location and those of stops along its itinerary, so that said lowering is substantially completed for boarding and alighting there and wherein said means (220) being arranged for determining said locations of stops on the basis of map data **characterised in that** said means for activation comprise means for progressive lowering of the vehicle.

9. A system according to claim 8, comprising means (220) for determining said locations of stops by means of a geographical positioning system.

10. A system according to any one of claims 8-9, comprising means (220) for providing said locations of stops by means of registered itinerary characteristics.

11. A system according to any one of claims 8-10, in which said means (200, 210, 220, 230) for activating said lowering comprise means (232) for activating said lowering in response to the wishes of passengers intending to board and/or alight.

12. A system according to claim 11, comprising means (230) for determining said passenger wishes, comprising means for monitoring of stop signals and/or means for monitoring of movements on board the vehicle and/or means for monitoring of prospective passengers at stops.

13. A system according to any one of claims 8-12, in which said means (200, 210, 220, 230) for activating said lowering comprise means (234) for activating said lowering on the basis of vehicle-specific characteristics, e.g. braking, direction indicator activity.

14. A system according to claim 1, in which said lowering is arranged to be carried through to completion if the vehicle has to call at the respective stop.

15. A motor vehicle provided with a system according to any one of claims 8-14.

16. A computer programme (P) for more efficient boarding and alighting at stops for road-based vehicles of public transport type, which programme (P) comprises programme code which, when run by an electronic control unit (200) or another computer (500) connected to the electronic control unit (200), enables the electronic control unit (200) to perform steps according to claims 1-7.

17. A computer programme product comprising a digital storage medium which stores the computer programme according to claim 16.

## Patentansprüche

1. Verfahren zum effizienteren Ein- und Aussteigen an Haltestellen von Straßenfahrzeugen im öffentlichen Nahverkehr, das den Schritt der Aktivierung des Absenkens des Fahrzeugs zum Ein- und Aussteigen an Haltestellen aufweist, wobei der Schritt der Aktivierung (S1) des Absenkens vor der Ankunft an der jeweiligen Haltestelle auf Basis der Position des Fahrzeugs und der Orte der Haltestellen entlang seines Streckenplans erfolgt, so dass das Absenken zum Ein- und Aussteigen im Wesentlichen dort abgeschlossen ist, und wobei der Schritt der Bestimmung der Orte der Haltestellen auf Basis von Kartendaten erfolgt, **dadurch gekennzeichnet, dass** die Aktivierung das progressive Absenken des Fahrzeugs betrifft.

2. Verfahren nach Anspruch 1, das den Schritt der Bestimmung der Orte der Haltestellen mittels eines geographischen Navigationssystems aufweist.

3. Verfahren nach einem der Ansprüche 1 bis 2, das den Schritt der Bereitstellung der Orte der Haltestellen mittels eingetragener Streckenplan-Kennwerte aufweist.

4. Verfahren nach einem der Ansprüche 1 bis 3, bei dem der Schritt der Aktivierung des Absenkens als Reaktion auf die Wünsche von Fahrgästen erfolgt, die ein- und/oder aussteigen möchten.

5. Verfahren nach Anspruch 4, das den Schritt der Bestimmung dieser Fahrgastwünsche aufweist, der die Kontrolle von Anhaltesignalen und/oder die Kontrolle von Bewegungen an Bord des Fahrzeugs und/oder die Beobachtung potentieller Fahrgäste an Haltestellen aufweist.

6. Verfahren nach einem der Ansprüche 1 bis 5, bei dem der Schritt der Aktivierung des Absenkens auf Basis fahrzeugspezifischer Eigenschaften, z. B. Bremsen, Aktivität des Fahrtrichtungsanzeigers erfolgt.

7. Verfahren nach Anspruch 1, bei dem das Absenken bis zum Abschluss ausgeführt wird, wenn das Fahrzeug an der jeweiligen Haltestelle anhalten muss.

8. System (I) zum effizienteren Ein- und Aussteigen an Haltestellen von Straßenfahrzeugen im öffentlichen Nahverkehr, das Mittel zum Aktivieren des Absenkens des Fahrzeugs zum Ein- und Aussteigen an Haltestellen aufweist, wobei die Mittel (200; 210) zum Aktivieren des Absenkens Mittel (200, 210, 220, 230) zum Aktivieren des Absenkens vor der Ankunft an der jeweiligen Haltestelle auf Basis der Fahrzeugposition und der Orte der Haltestellen entlang des Streckenplans aufweisen, so dass das Absenken im Wesentlichen vor dem Ein- und Aussteigen dort abgeschlossen ist, und wobei die Mittel (220) zum Bestimmen der Orte der Haltestellen auf Basis von Kartendaten ausgelegt sind, **dadurch gekennzeichnet, dass** die Mittel zur Aktivierung Mittel zum progressiven Absenken des Fahrzeugs aufweisen.

9. System nach Anspruch 8, das Mittel (220) zum Bestimmen der Orte der Haltestellen mittels eines geographischen Navigationssystems aufweist.

10. System nach einem der Ansprüche 8 bis 9, das Mittel (220) zur Bereitstellung der Orte der Haltestellen mittels eingetragener Streckenplan-Kennwerte aufweist.

11. System nach einem der Ansprüche 8 bis 10, wobei die Mittel (200, 210, 220, 230) zum Aktivieren des Absenkens Mittel (232) zum Aktivieren als Reaktion auf die Wünsche von Fahrgästen aufweisen, die ein- und/oder aussteigen möchten.

12. System nach Anspruch 11, das Mittel (230) zur Bestimmung dieser Fahrgastwünsche aufweist, Mittel zur Kontrolle von Anhaltesignalen und/oder Mittel zur Kontrolle von Bewegungen an Bord des Fahrzeugs und/oder Mittel zur Beobachtung potentieller Fahrgäste an Haltestellen.

13. System nach einem der Ansprüche 8 bis 12, bei dem die Mittel (200, 210, 220, 230) zum Aktivieren des Absenkens Mittel (234) zum Aktivieren des Absenkens auf Basis fahrzeugspezifischer Eigenschaften, z. B. Bremsen, Aktivität des Fahrtrichtungsanzeigers aufweisen.

14. System nach Anspruch 1, bei dem das Absenken so ausgelegt ist, dass es bis zum Abschluss ausgeführt sein muss, wenn das Fahrzeug an der jeweiligen Haltestelle anhalten soll.

15. Kraftfahrzeug mit einem System gemäß einem der Ansprüche 8 bis 14.

16. Computerprogramm (P) zum effizienteren Ein- und Aussteigen an Haltestellen von Straßenfahrzeugen im öffentlichen Nahverkehr, wobei das Programm (P) einen Programmcode aufweist, der bei Ausführung auf einer elektronischen Steuereinheit (200) oder einem anderen mit der elektronischen Steuereinheit (200) verbundenen Computer (500) die elektronische Steuereinheit (200) befähigt, die Schritte gemäß den Ansprüchen 1 bis 7 auszuführen.

17. Computerprogrammprodukt, das ein digitales Speichermedium aufweist, das das Computerprogramm gemäß Anspruch 16 speichert.

## Revendications

1. Procédé pour un embarquement et un débarquement plus efficaces à des arrêts pour des véhicules routiers de type transport public, comprenant l'étape consistant à activer l'abaissement du véhicule pour lesdits embarquement et débarquement à des arrêts, l'étape d'activation (S1) dudit abaissement ayant lieu avant l'arrivée à l'arrêt respectif, sur la base de l'emplacement du véhicule et de ceux des arrêts le long de son itinéraire, de sorte que ledit abaissement est sensiblement achevé pour l'embarquement et le débarquement et dans lequel l'étape consistant à déterminer lesdits emplacements d'arrêts s'effectue sur la base de données cartographiques, **caractérisé en ce que** ladite activation concerne un abaissement progressif du véhicule.

2. Procédé selon la revendication 1, comprenant l'étape consistant à déterminer lesdits emplacements d'arrêts s'effectue au moyen d'un système de positionnement géographique.

3. Procédé selon l'une quelconque des revendications 1 et 2, comprenant l'étape consistant à fournir lesdits emplacements d'arrêts au moyen de caractéristiques d'itinéraire enregistrées.

4. Procédé selon l'une quelconque des revendications 1 à 3, dans lequel l'étape d'activation dudit abaissement a lieu en réponse aux souhaits de passagers ayant l'intention d'embarquer et/ou de débarquer.

5. Procédé selon la revendication 4, comprenant l'étape consistant à déterminer lesdits souhaits de passager, comprenant la surveillance de signaux d'arrêt et/ou la surveillance de mouvements à bord du véhicule et/ou la surveillance de passagers éventuels à des arrêts.

6. Procédé selon l'une quelconque des revendications 1 à 5, dans lequel l'étape d'activation dudit abaissement a lieu sur la base de caractéristiques spécifiques au véhicule, par exemple un freinage, ou une activité d'indicateur de direction.

7. Procédé selon la revendication 1, dans lequel ledit abaissement est effectué jusqu'à achèvement si le véhicule doit appeler à l'arrêt respectif.

8. Système (I) pour un embarquement et un embarquement plus efficaces à des arrêts pour des véhicules routiers de type transport public, comprenant des moyens pour activer l'abaissement du véhicule pour lesdits embarquement et débarquement à des arrêts, lesdits moyens (200 ; 210) pour activer ledit abaissement comprennent des moyens (200, 210, 220, 230) pour activer ledit abaissement avant l'arrivée à l'arrêt respectif, sur la base de l'emplacement du véhicule et de ceux des arrêts le long de son itinéraire, de sorte que ledit abaissement est sensiblement achevé pour l'embarquement et le débarquement et dans lequel lesdits moyens (220) sont conçus pour déterminer lesdits emplacements d'arrêts sur la base de données cartographiques, **caractérisé en ce que** lesdits moyens d'activation comprennent des moyens pour abaisser progressivement le véhicule.

9. Système selon la revendication 8, comprenant des moyens (220) pour déterminer lesdits emplacements d'arrêts au moyen d'un système de positionnement géographique.

10. Système selon l'une quelconque des revendications 8 et 9, comprenant des moyens (220) pour fournir lesdits emplacements d'arrêts au moyen de caractéristiques d'itinéraire enregistrées.

11. Système selon l'une quelconque des revendications 8 à 10, dans lequel lesdits moyens (200, 210, 220, 230) pour activer ledit abaissement comprennent des moyens (232) pour activer ledit abaissement en réponse aux souhaits de passagers ayant l'intention d'embarquer et/ou de débarquer.

12. Système selon la revendication 11, comprenant des moyens (230) pour déterminer lesdits souhaits de passager, comprenant des moyens pour surveiller des signaux d'arrêt et/ou des moyens pour surveiller des mouvements à bord du véhicule et/ou des moyens pour surveiller des passagers éventuels à des arrêts.

13. Système selon l'une quelconque des revendications 8 à 12, dans lequel lesdits moyens (200, 210, 220, 230) pour activer ledit abaissement comprennent des moyens (234) pour activer ledit abaissement sur la base de caractéristiques spécifiques au véhicule, par exemple un freinage, ou une activité d'indicateur de direction.

14. Système selon la revendication 1, dans lequel ledit abaissement est conçu pour être effectué jusqu'à achèvement si le véhicule doit appeler à l'arrêt respectif.

15. Véhicule à moteur muni d'un système selon l'une quelconque des revendications 8 à 14.

16. Programme informatique (P) pour un embarquement et un débarquement plus efficaces à des arrêts pour des véhicules routiers de type transport public, lequel programme (P) comprend un code de programme qui, lorsqu'il est exécuté par une unité de commande électronique (200) ou un autre ordinateur (500) connecté à l'unité de commande électronique (200), permet à l'unité de commande électronique (200) d'effectuer des étapes selon les revendications 1 à 7.

17. Produit de programme informatique comprenant un support de mémorisation numérique qui mémorise le programme informatique selon la revendication 16.
